# EUROPÄISCHE PATENTSCHRIFT

(11) **EP 1 974 966 B1**
(45) Veröffentlichungstag und Bekanntmachung des Hinweises auf die Patenterteilung: **05.10.2011**
(21) Anmeldenummer: 08005078.4
(22) Anmeldetag: 19.03.2008
(51) Int. Cl.: B60J 5/04, B60R 13/02

(54) **Kraftfahrzeug mit gegensinnig verschwenkbaren Seitentüren und einer zwischenliegenden Fahrzeugsäule**
Vehicle with opposite rotating side doors having a vertical column between these side doors
Véhicule avec de portes latérales ouvrant dans le sens contraire avant une colonne verticale

(30) Priorität: 24.03.2007 DE 102007014209
(43) Veröffentlichungstag der Anmeldung: 01.10.2008
(73) Patentinhaber: GM Global Technology Operations LLC, Detroit, MI 48265-3000 (US)
(72) Erfinder: Kenjiro, Tajima, 95195 Wiesbaden (DE); Loeb, Niels, 65191 Wiesbaden (DE)
(74) Vertreter: Strauss, Peter

(56) Entgegenhaltungen:
- DE-A1- 10 119 131
- US-A- 1 639 037
- US-A- 5 968 614
- US-A- 5 992 914
- US-A- 6 103 168
- US-B1- 6 409 256
- US-B1- 6 416 113

## Beschreibung

Die vorliegende Erfindung betrifft ein Kraftfahrzeug mit einer vorderen Seitentür für eine vordere Fahrzeugöffnung und einer hinteren Seitentür für eine hintere Fahrzeugöffnung, wobei die vordere Seitentür eine vordere Schwenkachse und die hintere Seitentür eine hintere Schwenkachse aufweist und die beiden Fahrzeugtüren gegensinnig in die jeweilige Öffnungsstellung und die jeweilige Schließstellung um die Schwenkachsen verschwenkt werden können.

Aus der Praxis sind eine Vielzahl von Kraftfahrzeugen mit gegensinnig verschwenkbaren Seitentüren bekannt. So sind insbesondere Kraftfahrzeuge mit einer vorderen und einer hinteren Seitentür bekannt, wobei die vordere Seitentür eine vordere Ein- oder Ausstiegsöffnung und die hintere Seitentür eine hintere Ein- oder Ausstiegsöffnung verschließt. Die vordere Seitentür kann dabei um eine vordere vertikale Schwenkachse von der Schließstellung in die Öffnungsstellung verschwenkt werden, während die hintere Seitentür in entgegengesetzter Richtung um eine hintere Schwenkachse von der Schließstellung in die Öffnungsstellung verschwenkt werden kann. Man spricht hier auch von Schmetterlingstüren. Die vordere und die hintere Ein- oder Ausstiegsöffnung bilden gemeinsam eine zusammenhängende große Ein- oder Ausstiegsöffnung aus, wenn beide Seitentüren in die Öffnungsstellung verschwenkt sind.

Die bekannten Kraftfahrzeuge haben den Nachteil, dass die obere und die untere Struktur des Kraftfahrzeugrahmens aufgrund der großen, zusammenhängenden Ein- oder Ausstiegsöffnung besonders stabil ausgeführt werden müssen, um die Steifigkeit des Kraftfahrzeugrahmens zu erhöhen. Dies führt zu besonders schweren und Platzraubenden oberen bzw. unteren Strukturen im Bereich der Ein- oder Ausstiegsöffnungen.

Um die Steifigkeit des Kraftfahrzeugrahmens zu erhöhen, schlägt die gattungsgemäße DE 101 19 131 A1 ein Kraftfahrzeug vor, bei dem eine B-Säule zwischen der vorderen und der hinteren Einstiegsöffnung vorgesehen ist. Auf diese Weise kann die obere und untere Struktur des Kraftfahrzeugrahmens weniger stabil und bauraumintensiv ausgebildet sein. Das bekannte Kraftfahrzeug ist jedoch insofern nachteilig, als dass die Gestaltungsmöglichkeiten der B-Säule eingeschränkt sind, während die bei geöffneter vorderer und hinterer Seitentür vollständig freigelegte B-Säule darüber hinaus leicht beschädigt, also beispielsweise verkratzt, werden kann.

Aus der einleitenden Beschreibung in der US 6,409,256 B1 ist es ferner bekannt, Applikationen an der Außenseite der B-Säule eines Kraftfahrzeugs mit herkömmlichen, gleichsinnig verschwenkbaren Seitentüren vorzusehen, die einerseits der optischen Gestaltung dienen und andererseits die B-Säule schützen. Die Applikationen verdecken jedoch nur einen kleinen Oberflächenabschnitt der B-Säule, so dass die Gestaltungsmöglichkeiten sowie der Schutz der B-Säule eingeschränkt ist.

Es ist daher eine Aufgabe der vorliegenden Erfindung, ein Kraftfahrzeug mit gegensinnig verschwenkbaren Seitentüren und einer zwischen den Einstiegsöffnungen angeordneten Fahrzeugsäule zu schaffen, bei dem die Fahrzeugsäule vor Beschädigungen sicher geschützt ist und größtenteils individuell gestaltet werden kann. Ferner beinhaltet die Aufgabe weitere Funktionen in der Fahrzeugsäule zu integrieren.

Diese Aufgabe wird durch die in Patentanspruch 1 angegebenen Merkmale gelöst. Vorteilhafte Ausführungsformen der Erfindung sind Gegenstand der Unteransprüche.

Das erfindungsgemäße Kraftfahrzeug weist eine vordere Seitentür für eine vordere Fahrzeugöffnung und eine hintere Seitentür für eine hintere Fahrzeugöffnung auf. Unter einer Fahrzeugöffnung kann hierbei eine Ein- oder Ausstiegsöffnung für Personen verstanden werden. Die vordere Seitentür weist eine vordere Schwenkachse auf, während die hintere Seitentür eine hintere Schwenkachse aufweist. Dabei können die Fahrzeugtüren gegensinnig in die jeweilige Öffnungsstellung und die jeweilige Schließstellung um die Schwenkachsen verschwenkt werden. Man kann hier auch von so genannten Schmetterlingstüren sprechen. So kann beispielsweise die Innenseite der in die Öffnungsstellung verschwenkten vorderen Tür entgegen der Fahrtrichtung weisen, während die Innenseite der in die Öffnungsstellung verschwenkten hinteren Tür in die Fahrtrichtung weisen kann. Es ist ferner eine Fahrzeugsäule zwischen der vorderen und der hinteren Fahrzeugöffnungen vorgesehen.

Bei der Erfindung sind somit zwei Fahrzeugöffnungen vorgesehen, die durch die Fahrzeugsäule voneinander getrennt sind. Die Fahrzeugsäule, die beispielsweise zwischen dem oberen Dachrahmen und dem unteren Rahmen des Kraftfahrzeugs verlaufen kann, trägt somit erheblich zur Steifigkeit des Kraftfahrzeugrahmens bei, so dass die obere Struktur wie auch die untere Struktur allein nicht so stabil ausgeführt sein müssen. Hierdurch ist insbesondere das Gewicht reduziert.

Erfindungsgemäß ist ferner an der Fahrzeugsäule ein nach außen weisendes Verkleidungsteil an der B-Säule vorgesehen. So kann das Verkleidungsteil beispielsweise die dem Kraftfahrzeuginnenraum abgewandte Seite der Fahrzeugsäule verdecken. Durch das nach außen weisende Verkleidungsteil ist zum einen eine weitgehend individuelle äußere Gestaltung des Kraftfahrzeugs schon während des Herstellungsprozesses möglich. So können beispielsweise Verkleidungsteile mit unterschiedlichen Farben gewählt werden, um individuelle Kundenwünsche zu erfüllen. Demgegenüber wäre eine entsprechende Lackierung der Fahrzeugsäule in der entsprechenden Farbe wesentlich aufwändiger. Zum anderen dient das Verkleidungsteil dem Schutz der in der Regel aus Leichtmetall bestehenden B-Säule vor Kratzspuren o. ä. So kann beispielsweise ein besonders kratzfestes Material für das Verkleidungsteil verwendet werden. Insbesondere bei Schmetterlingstüren ist dies von Vorteil, da die B-Säule nach dem Verschwenken der beiden Seitentüren in die Öffnungsstellung vollständig freiliegt. Auch kann das Verkleidungsteil besonders einfach eingesetzt werden, um Schweißnähte oder andere herstellungsbedingte Umregelmäßigkeiten zu verdecken.

Um die Fahrzeugsäule besonders umfangreich gestalten, schützen und verdecken zu können, weist erfindungsmäß das Verkleidungsteil einen Mittelabschnitt zur Abdeckung der nach außen weisenden Seite der Fahrzeugsäule und mindestens einen Seitenabschnitt zur Abdeckung der der vorderen oder hinteren Fahrzeugöffnung zugewandten Seite der Fahrzeugsäule auf. So kann das Verkleidungsteil beispielsweise einen im Wesentlichen U-förmigen Querschnitt mit zwei Seitenabschnitten aufweisen, um beide Seiten der Fahrzeugsäule zu umgreifen.

Um die Fahrzeugsäule dabei weitgehend abdecken und individuell gestalten zu können, ohne gleichzeitig deren Funktionen zu beeinträchtigen, ist erfindungsmäß an der Fahrzeugsäule ein Teil einer Schließeinrichtung zum Verschließen der vorderen oder hinteren Seitentür befestigt, wobei in dem Seitenabschnitt erfindungsgemäß mindestens eine Aussparung zum Hindurchführen dieses Teils der Schließeinrichtung vorgesehen ist. So kann das Verkleidungsteil die Fahrzeugsäule auch im Bereich um den Schließbügel abdecken, ohne dabei ein Verschließen der Seitentür zu behindern.

In einer bevorzugten Ausführungsform des erfindungsgemäßen Kraftfahrzeugs ist die Fahrzeugsäule die B-Säule des Kraftfahrzeugs.

Um das Verkleidungsteil einerseits besonders sicher und andererseits in optisch ansprechender Weise an der Fahrzeugsäule zu befestigen, ist das Verkleidungsteil in einer vorteilhaften Ausführungsform des erfindungsgemäßen Kraftfahrzeugs über Befestigungsmittel, die an den Seitenabschnitten des Verkleidungsteils vorgesehen sind, an der Fahrzeugsäule befestigt. So treten auf dem nach außen weisenden Mittelabschnitt des Verkleidungsteils keinerlei Befestigungsmittel in Erscheinung, sondern - wenn überhaupt - lediglich an den schwerer wahrnehmbaren Seitenabschnitten.

In einer weiteren vorteilhaften Ausführungsform des erfindungsgemäßen Kraftfahrzeugs ist das Teil der Schließeinrichtung als Schließbügel ausgebildet.

Um das Verkleidungsteil besonders einfach an der Fahrzeugsäule befestigen zu können, ist die Aussparung in einer besonders vorteilhaften Ausführungsform des erfindungsgemäßen Kraftfahrzeugs eine lang gestreckte, randseitige Einbuchtung in dem Seitenabschnitt des Verkleidungsteils. Auf diese Weise kann der Teil der Schließeinrichtung bei der Montage des Verkleidungsteils einfach seitlich in die Einbuchtung eingeführt werden.

In einer weiteren bevorzugten Ausführungsform des erfindungsgemäßen Kraftfahrzeugs ist in dem Verkleidungsteil ein Aufnahmefach zur Aufnahme von Gegenständen vorgesehen. Das Aufnahmefach ist vorzugsweise in dem Mittelabschnitt des Verkleidungsteils vorgesehen. So kann in dem Aufnahmefach beispielsweise Kleingeld zur Zahlung von Parkgebühren aufgenommen werden, wobei die Anordnung in dem Verkleidungsteil der Fahrzeugsäule einen besonders schnellen Zugriff nach dem Aussteigen ermöglicht.

In einer bevorzugten Ausführungsform des erfindungsgemäßen Kraftfahrzeugs ist die Fahrzeugsäule die B-Säule des Kraftfahrzeugs.

Um das Verkleidungsteil einerseits besonders sicher und andererseits in optisch ansprechender Weise an der Fahrzeugsäule zu befestigen, ist das Verkleidungsteil in einer vorteilhaften Ausführungsform des erfindungsgemäßen Kraftfahrzeugs über Befestigungsmittel, die an den Seitenabschnitten des Verkleidungsteils vorgesehen sind, an der Fahrzeugsäule befestigt. So treten auf dem nach außen weisenden Mittelabschnitt des Verkleidungsteils keinerlei Befestigungsmittel in Erscheinung, sondern - wenn überhaupt - lediglich an den schwerer wahrnehmbaren Seitenabschnitten.

In einer weiteren vorteilhaften Ausführungsform des erfindungsgemäßen Kraftfahrzeugs ist das Teil der Schließeinrichtung als Schließbügel ausgebildet.

Um das Verkleidungsteil besonders einfach an der Fahrzeugsäule befestigen zu können, ist die Aussparung in einer besonders vorteilhaften Ausführungsform des erfindungsgemäßen Kraftfahrzeugs eine lang gestreckte, randseitige Einbuchtung in dem Seitenabschnitt des Verkleidungsteils. Auf diese Weise kann der Teil der Schließeinrichtung bei der Montage des Verkleidungsteils einfach seitlich in die Einbuchtung eingeführt werden.

In einer weiteren bevorzugten Ausführungsform des erfindungsgemäßen Kraftfahrzeugs ist in dem Verkleidungsteil ein Aufnahmefach zur Aufnahme von Gegenständen vorgesehen. Das Aufnahmefach ist vorzugsweise in dem Mittelabschnitt des Verkleidungsteils vorgesehen. So kann in dem Aufnahmefach beispielsweise Kleingeld zur Zahlung von Parkgebühren aufgenommen werden, wobei die Anordnung in dem Verkleidungsteil der Fahrzeugsäule einen besonders schnellen Zugriff nach dem Aussteigen ermöglicht.

Damit sich eine aus dem Kraftfahrzeug ausgestiegene Person, die beispielsweise einen Regenschirm, eine Tasche, eine Jacke o. ä. mit sich führt, zunächst ordnen kann, ist in einer weiteren bevorzugten Ausführungsform des erfindungsgemäßen Kraftfahrzeugs an dem Verkleidungsteil mindestens ein Aufhängemittel zum Aufhängen von Gegenständen vorgesehen. Hier kann beispielsweise die Jacke oder ein Regenschirm kurzzeitig aufgehängt werden.

In einer vorteilhaften Ausführungsform des erfindungsgemäßen Kraftfahrzeugs ist das Aufhängemittel haken- oder ösenförmig ausgebildet.

Gemäß einer weiteren vorteilhaften Ausführungsform des erfindungsgemäßen Kraftfahrzeugs ist an dem Verkleidungsteil ein Flaschenöffner vorgesehen. Hierbei kann es sich beispielsweise um einen Öffner zum Entfernen von Kronkorken handeln. Bezüglich des Aufbaus eines solchen Flaschenöffners sei hier auf den Stand der Technik verwiesen.

Um die Fahrzeugsäule umfangreich gestalten, schützen und verdecken zu können und bei entsprechender Farbgebung den Eindruck einer gar nicht vorhandenen Fahrzeugsäule zu erzeugen, erstreckt sich das Verkleidungsteil ausgehend vom oberen Ende über mindestens 2/3 der Länge der Fahrzeugsäule, vorzugsweise über die gesamte Länge der Fahrzeugsäule.

In einer weiteren bevorzugten Ausführungsform des erfindungsgemäßen Kraftfahrzeugs ist an einem unteren Abschnitt des Verkleidungsteils oder einem unteren, nicht von dem Verkleidungsteil abgedeckten Abschnitt der Fahrzeugsäule ein Leuchtmittel vorgesehen. So kann sich das Verkleidungsteil im erstgenannten Fall beispielsweise über die gesamte Länge der Fahrzeugsäule erstrecken, während das Verkleidungsteil im zweiten Fall den unteren Abschnitt der Fahrzeugsäule, in dem das Leuchtmittel angeordnet ist, nicht verdeckt. Das Leuchtmittel kann beispielsweise als Einstiegs- oder Ausstiegshilfe dienen und als elektrisch betriebende Lampe ausgebildet sein.

In einer besonders bevorzugten Ausführungsform des erfindungsgemäßen Kraftfahrzeugs ist das Leuchtmittel nach außen und schräg nach unten gerichtet. Auf diese Weise kann das Leuchtmittel den Boden im Bereich der Fahrzeugöffnungen beleuchten und auf etwaige Schwierigkeiten beim Aussteigen aufmerksam machen, wie beispielsweise auf Pfützen.

Um das speziell gestaltete Verkleidungsteil vor unbefugtem Zugriff zu schützen, ist in einer weiteren vorteilhaften Ausführungsform des erfindungsgemäßen Kraftfahrzeugs das Aufnahmefach, das Aufhängemittel, der Flaschenöffner und/oder das Leuchtmittel in der Schließstellung der beiden Seitentüren von den Seitentüren verdeckt. Dies kann beispielsweise durch einen seitlich hervorstehenden Rand an den Seitentüren erfolgen.

In einer weiteren vorteilhaften Ausführungsform des erfindungsgemäßen Kraftfahrzeugs ist das Verkleidungsteil ein Kunststoffteil.

Um die Montage des Verkleidungsteils durch den Monteur zu vereinfachen, umfasst das Verkleidungsteil in einer weiteren bevorzugten Ausführungsform des erfindungsgemäßen Kraftfahrzeugs ein Oberteil und ein Unterteil, die verschiedenfarbig ausgeführt sind. Hierdurch wird nicht nur die Montage erleichtert, indem die vorbestimmte Orientierung und Anordnung des Verkleidungsteiles besser erkennbar ist, vielmehr kann durch entsprechende Farbgebung auch der Eindruck erzeugt werden, dass gar keine Fahrzeugsäule vorhanden ist. So könnte das Oberteil in einem schimmernden Schwarz gehalten sein, während das Unterteil ein mattes Schwarz aufweist. Beim Betrachter wird hierdurch der Eindruck erweckt, dass es sich hierbei um die Seiten der Fahrzeugsitze, nicht aber um eine Fahrzeugsäule handelt.

Grundsätzlich kann das Verkleidungsteil mehrstückig bzw. -teilig ausgebildet sein. In einer weiteren vorteilhaften Ausführungsform des erfindungsgemäßen Kraftfahrzeugs ist das Verkleidungsteil jedoch einstückig ausgebildet, da hierdurch die Teilezahl reduziert und die Montage vereinfacht ist.

In einer weiteren bevorzugten Ausführungsform des erfindungsgemäßen Kraftfahrzeugs ist eine die vordere oder hintere Fahrzeugöffnung umgebende erste Dichtung zur Erzielung einer Abdichtung zwischen der vorderen oder hinteren Seitentür und dem Fahrzeugrahmen vorgesehen, die sich zum Teil entlang der Fahrzeugsäule erstreckt. Ferner ist eine zweite Dichtung zur Erzielung einer Abdichtung zwischen der vorderen oder hinteren Seitentür und dem Verkleidungsteil vorgesehen. Die zweite Dichtung trägt somit zu einer besonders dichten Fahrzeugöffnung bei, wenn die Seitentür in die Schließstellung verschwenkt ist. Die zweite Dichtung kann beispielsweise als lang gestreckte Dichtung an dem Verkleidungsteil angeordnet sein.

Die Erfindung wird im Folgenden anhand von beispielhaften Ausführungsformen unter Bezugnahme auf die beigefügten Zeichnungen näher erläutert. Es zeigen:
- Fig. 1: eine Seitenansicht einer Ausführungsform des erfindungsgemäßen Kraftfahrzeugs mit den Seitentüren in der Öffnungsstellung,
- Fig. 2: eine perspektivische Explosionsdarstellung der Fahrzeugsäule und des Verklei- dungsteiles von Fig. 1 in einer ersten Aus- führungsform und
- Fig. 3: eine perspektivische Explosionsdarstellung der Fahrzeugsäule und des Verkleidungs- teiles von Fig. 1 in einer zweiten Aus- führungsform.

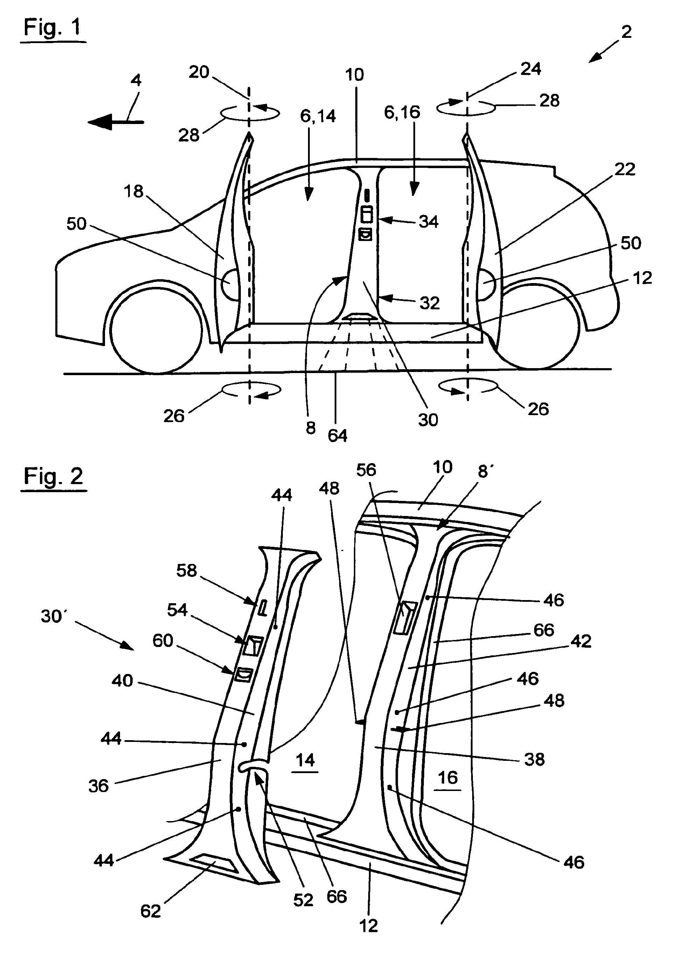

Fig. 1 zeigt eine Seitenansicht des erfindungsgemäßen Kraftfahrzeugs 2. Das Kraftfahrzeug 2, dessen Fahrtrichtung mit dem Bezugszeichen 4 gekennzeichnet ist, weist eine seitliche große Fahrzeugöffnung 6 auf, wobei eine Fahrzeugsäule 8 vorgesehen ist, die sich von einem Fahrzeugdach 10 bis zu einem Fahrzeugboden 12 erstreckt. Bei der Fahrzeugsäule 8 handelt es sich um eine B-Säule des Kraftfahrzeugs 2, die die seitliche Fahrzeugöffnung 6 in eine in Fahrtrichtung 4 vordere Fahrzeugöffnung 14 und eine entgegen der Fahrtrichtung 4 hintere Fahrzeugöffnung 16 unterteilt. Die vordere Fahrzeugöffnung 14 dient als Ein- oder Ausstiegsöffnung für die erste Sitzreihe und die hintere Fahrzeugöffnung 16 dient als Ein- oder Ausstiegsöffnung für die hinter der ersten Sitzreihe gelegene zweite Sitzreihe. Die Sitzreihen sind aus Gründen der Übersichtlichkeit nicht in Fig. 1 dargestellt.

Die vordere Fahrzeugöffnung 14 kann durch eine vordere Seitentür 18 verschlossen werden. Die vordere Seitentür 18 kann um eine im Wesentlichen vertikale vordere Schwenkachse 20 verschwenkt werden. Die vordere Schwenkachse 20 ist dabei auf der der hinteren Fahrzeugöffnung 16 abgewandten Seite der vorderen Fahrzeugöffnung 14 angeordnet. Die hintere Fahrzeugöffnung 16 kann durch eine hintere Seitentür 22 verschlossen werden. Die hintere Seitentür 22 kann um eine im Wesentlichen vertikale hintere Schwenkachse 24 verschwenkt werden. Die hintere Schwenkachse 24 ist dabei auf der der vorderen Fahrzeugöffnung 14 abgewandten Seite der hinteren Fahrzeugöffnung 16 angeordnet. Die Anlenkung der Seitentüren 18, 22 erfolgt demzufolge nicht an der Fahrzeugsäule 8.

Um die Seitentüren 18, 22 von der Schließstellung, in der die Seitentüren 18, 22 die Fahrzeugöffnungen 14, 16 verschließen, in die Öffnungsstellung zu bringen, die in Fig. 1 gezeigt ist, müssen die Seitentüren 18, 22 gegensinnig um die jeweilige Schwenkachse 20 bzw. 24 verschwenkt werden, wie dies anhand der Pfeile 26 angedeutet ist. Um die Seitentüren 18, 22 wieder von der Öffnungsstellung in die Schließstellung zu bringen, müssen die Seitentüren 18, 22 erneut gegensinnig um die jeweilige Schwenkachse 20 bzw. 24 verschwenkt werden, wobei diesmal in Richtung der Pfeile 28 verschwenkt werden muss. Man spricht hier auch von so genannten Schmetterlingstüren.

An der Fahrzeugsäule 8 ist ein nach außen weisendes Verkleidungsteil 30 vorgesehen, das die Fahrzeugsäule 8 in der Seitenansicht von Fig. 1 verdeckt. Das Verkleidungsteil 30 ist als Kunststoffteil ausgebildet, wobei sich das einstückige Verkleidungsteil 30 aus einem Unterteil 32 und einem Oberteil 34 zusammensetzt, die verschiedenfarbig ausgeführt sind (nicht dargestellt). So ist das Unterteil 32 in einem matten Schwarz gehalten, während das Oberteil 34 in einem glänzenden Schwarz ausgeführt ist. Auf diese Weise wird vor dem Hintergrund des Fahrzeuginnenraums der Eindruck erweckt, dass gar keine Fahrzeugsäule 8 vorhanden ist. Ferner vereinfacht dies die Montage durch den Monteur, der anhand der Farbgebung die vorbestimmte Orientierung des Verkleidungsteils 30 schnell erfassen kann.

Fig. 2 zeigt eine Explosionsdarstellung einer ersten Ausführungsform des Verkleidungsteils 30' und der Fahrzeugsäule 8' von Fig. 1. Das Verkleidungsteil 30' weist einen Mittelabschnitt 36 zur Abdeckung einer nach außen weisenden Seite 38 der Fahrzeugsäule 8' auf. Es sind ferner zwei winklig an den Mittelabschnitt 36 anschließende Seitenabschnitte 40 zur Abdeckung der Seiten 42 der Fahrzeugsäule 8' vorgesehen. Die Seite 42 ist der vorderen bzw. hinteren Fahrzeugöffnung 14, 16 zugewandt, wobei in Fig. 1 lediglich der Seitenabschnitt 40 zur Abdeckung der Seite 42 der Fahrzeugsäule 8 zu sehen ist, die der hintere Fahrzeugöffnung 16 zugewandt ist. Im Einbauzustand ist das Verkleidungsteil 30' über nicht näher dargestellte Befestigungsmittel an den Seitenabschnitten 40 an der Fahrzeugsäule 8' befestigt, wie dies anhand der Befestigungspunkte 44 an dem Seitenabschnitt 40 und den zugehörigen Befestigungspunkten 46 an der Seite 42 der Fahrzeugsäule 8 angedeutet ist.

An den Seiten 42 der Fahrzeugsäule 8' ist ferner ein Teil einer Schließeinrichtung zum Verschließen der vorderen und hinteren Seitentür 18, 22 befestigt, wobei es sich in diesem Beispiel um einen Schließbügel 48 handelt. Der zugehörige weitere Teil 50 der Schließeinrichtung befindet sich an den Seitentüren 18, 22 und zwar an der der Schwenkachse 20 bzw. 24 abgewandten Seite der Seitentür 18 bzw. 22, wie dies in Fig. 1 gezeigt ist. Um die Funktion des Schließbügels 48 nicht zu beeinträchtigen und dennoch eine weitgehende Abdeckung der Fahrzeugsäule 8' durch das Verkleidungsteil 30' zu erzielen, ist in den Seitenabschnitten 40 des Verkleidungsteils 30' eine Aussparung 52 vorgesehen, durch die der Schließbügel 48 im Einbauzustand des Verkleidungsteils 30' hindurchgeführt ist. Um darüber hinaus die Montage zu vereinfachen, ist die Aussparung 52 als eine lang gestreckte, randseitige Einbuchtung in dem Seitenabschnitt 40 des Verkleidungsteils 30' ausgebildet.

Um den Funktionsumfang des Verkleidungsteils 30' zu erweitern, ist in dessen Mittelabschnitt 36 ein Aufnahmefach 54 vorgesehen, dessen Öffnung zur Seite des Kraftfahrzeugs 2 weist. In dem Aufnahmefach 54 können kleine Gegenstände, wie beispielsweise Kleingeld für die Parkuhr, aufgenommen werden, wobei die Wand des Aufnahmefachs 54 vorzugsweise vollständig von dem Verkleidungsteil 30' gebildet ist, um zusätzliche Maßnahmen für eine sichere Abdichtung gegenüber der Fahrzeugsäule 8' zu vermeiden. Vielmehr muss in der dahinterliegenden Seite 38 der Fahrzeugsäule 8' lediglich eine Vertiefung 56 vorgesehen sein, in der das Aufnahmefach 54 einliegen kann. An dem Mittelabschnitt 36 des Verkleidungsteils 30' ist ferner ein Aufhängemittel 58 vorgesehen, das als Haken ausgebildet ist, aber ebenso ösenförmig ausgebildet sein könnte. Darüber hinaus ist an dem Mittelabschnitt 36 des Verkleidungsteils 30' ein Flaschenöffner 60 angeordnet.

In der ersten Ausführungsform von Fig. 2 erstreckt sich das Verkleidungsteil 30' ausgehend vom oberen Ende der Fahrzeugsäule 8' über die gesamte Länge derselben. In einem unteren Abschnitt des Verkleidungsteils 30, beispielsweise im Bereich des Unterteils 32 desselben, ist ein Leuchtmittel 62 vorgesehen. Das Leuchtmittel 62 ist schräg nach unten und außen gerichtet, so dass dieses den Boden 64 in der Nähe der hinteren und vorderen Fahrzeugöffnung 14, 16 beleuchtet, wie dies in Fig. 1 angedeutet ist. Das Aufnahmefach 54, das Aufhängemittel 58, der Flaschenöffner 60 und das Leuchtmittel 62 sind in der Schließstellung der beiden Seitentüren 18, 22 von den beiden Seitentüren 18, 22 verdeckt, um diese vor unbefugtem Zugriff zu schützen.

Das Kraftfahrzeug 2 weist ferner die vordere und die hintere Fahrzeugöffnung 14, 16 umgebende erste Dichtungen 66, 66 zur Erzielung einer Abdichtung zwischen der vorderen bzw. hinteren Seitentür 18, 22 und dem Fahrzeugrahmen auf, die sich zum Teil entlang der Fahrzeugsäule 8' erstrecken. Um eine höhere Dichtigkeit zu erzielen, ist ferner jeweils eine zweite Dichtung (nicht dargestellt) zur Abdichtung zwischen der vorderen bzw. hinteren Seitentür 18, 22 und dem Verkleidungsteil 30' vorgesehen. Die zweite Dichtung kann beispielsweise entlang des Übergangs zwischen dem Mittelabschnitt 36 und dem Seitenabschnitt 40 des Verkleidungsteils 30' verlaufen und an dem Verkleidungsteil 30' befestigt sein.

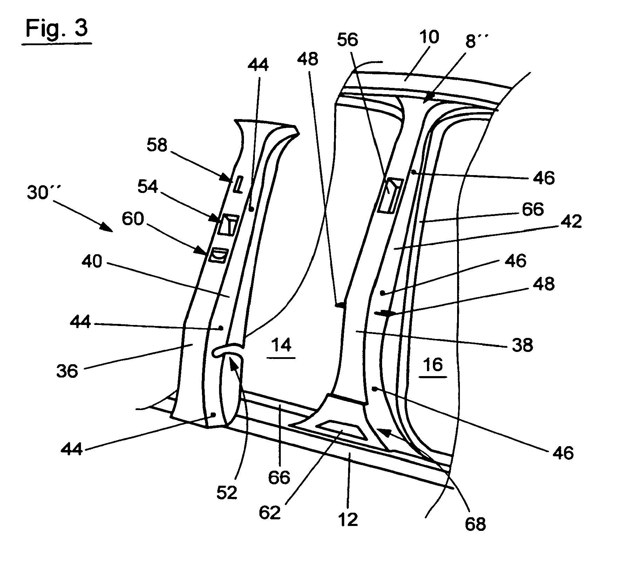

Fig. 3 zeigt eine Explosionsdarstellung einer zweiten Ausführungsform des Verkleidungsteils 30" und der Fahrzeugsäule 8" von Fig. 1, wobei die zweite Ausführungsform im Wesentlichen der ersten Ausführungsform von Fig. 2 entspricht, so dass nachstehend lediglich die Unterschiede zu der ersten Ausführungsform erläutert werden. Ferner werden gleiche Bezugszeichen für gleiche oder ähnliche Teile verwendet, wobei die obige Beschreibung diesbezüglich entsprechend gilt.

Bei der zweiten Ausführungsform erstreckt sich das Verkleidungsteil 30" ausgehend von dem oberen Ende der Fahrzeugsäule 8" lediglich über mehr als 2/3 der Länge derselben, nicht aber über deren gesamte Länge. Das Leuchtmittel 62 ist auch nicht an dem Verkleidungsteil 30" angeordnet, sondern vielmehr in einem unteren Abschnitt 68 der Fahrzeugsäule 8", der nicht von dem Verkleidungsteil 30" verdeckt ist. Das Leuchtmittel 62 ist dabei derart an der Fahrzeugsäule 30" angeordnet, dass sie wiederum eine Beleuchtung des Bodens 64 ermöglicht, wie dies in Fig. 1 angedeutet ist.

### Bezugszeichenliste

- 2: Kraftfahrzeug
- 4: Fahrtrichtung
- 6: Fahrzeugöffnung
- 8: Fahrzeugsäule
- 8': Fahrzeugsäule (erste Ausführungsform)
- 8 ": Fahrzeugsäule (zweite Ausführungsform)
- 10: Fahrzeugdach
- 12: Fahrzeugboden
- 14: vordere Fahrzeugöffnung
- 16: hintere Fahrzeugöffnung
- 18: vordere Seitentür
- 20: vordere Schwenkachse
- 22: hintere Seitentür
- 24: hintere Schwenkachse
- 26: Pfeile
- 28: Pfeile
- 30: Verkleidungsteil
- 30': Verkleidungsteil (erste Ausführungsform)
- 30": Verkleidungsteil (zweite Ausführungsform)
- 32: Unterteil
- 34: Oberteil
- 36: Mittelabschnitt
- 38: nach außen weisende Seite
- 40: Seitenabschnitt
- 42: der Fahrzeugöffnung zugewandte Seite
- 44: Befestigungspunkte (Verkleidungsteil)
- 46: Befestigungspunkte (Fahrzeugsäule)
- 48: Schließbügel
- 50: weiterer Teil der Schließeinrichtung
- 52: Aussparung
- 54: Aufnahmefach
- 56: Vertiefung
- 58: Aufhängemittel
- 60: Flaschenöffner
- 62: Leuchtmittel
- 64: Boden
- 66: erste Dichtung
- 68: unterer Abschnitt

## Patentansprüche

1. Kraftfahrzeug (2) mit einer vorderen Seitentür (18) für eine vordere Fahrzeugöffnung (14) und einer hinteren Seitentür (22) für eine hintere Fahrzeugöffnung (16), wobei die vordere Seitentür (18) eine vordere Schwenkachse (20) und die hintere Seitentür (22) eine hintere Schwenkachse (24) aufweist und die beiden Seitentüren (18, 22) gegensinnig in die jeweilige Öffnungsstellung und die jeweilige Schließstellung um die Schwenkachsen (20, 24) verschwenkbar sind, wobei eine Fahrzeugsäule (8, 8', 8") zwischen der vorderen und der hinteren Fahrzeugöffnung (14, 16) vorgesehen ist,
**dadurch gekennzeichnet, dass** ein nach außen weisendes Verkleidungsteil (30, 30', 30") an der Fahrzeugsäule (8, 8', 8") vorgesehen ist, das einen Mittelabschnitt (36) zur Abdeckung der nach außen weisenden Seite (38) der Fahrzeugsäule (8, 8', 8") und mindestens einen Seitenabschnitt (40) zur Abdeckung der der vorderen oder hinteren Fahrzeugöffnung (14, 16) zugewandten Seite (42) der Fahrzeugsäule (8, 8', 8") aufweist, wobei an der Fahrzeugsäule (8, 8', 8") ein Teil einer Schließeinrichtung zum Verschließen der vorderen oder hinteren Seitentür (14, 16) befestigt und in dem Seitenabschnitt (40) mindestens eine Aussparung (52) zum Hindurchführen des Teils der Schließeinrichtung vorgesehen ist.

2. Kraftfahrzeug nach Anspruch 1, **dadurch gekennzeichnet, dass** die Fahrzeugsäule (8, 8', 8") die B-Säule des Kraftfahrzeugs (2) ist.

3. Kraftfahrzeug nach einem der Ansprüche 1 oder 2, **dadurch gekennzeichnet, dass** das Verkleidungsteil (30, 30', 30") über Befestigungsmittel an den Seitenabschnitten (40) an der Fahrzeugsäule (8, 8', 8") befestigt ist.

4. Kraftfahrzeug nach einem der vorangehenden Ansprüche,
**dadurch gekennzeichnet, dass** das Teil der Schließeinrichtung ein Schließbügel ist.

5. Kraftfahrzeug nach einem der vorangehenden Ansprüche,
**dadurch gekennzeichnet, dass** die Aussparung (52) eine lang gestreckte, randseitige Einbuchtung in dem Seitenabschnitt (40) des Verkleidungsteils (30, 30', 30") ist.

6. Kraftfahrzeug nach einem der vorangehenden Ansprüche,
**dadurch gekennzeichnet, dass** in dem Verkleidungsteil (30, 30', 30") ein Aufnahmefach (54) zur Aufnahme von Gegenständen vorgesehen ist.

7. Kraftfahrzeug nach einem der vorangehenden Ansprüche,
**dadurch gekennzeichnet, dass** an dem Verkleidungsteil (30, 30', 30") mindestens ein Aufhängemittel (58) zum Aufhängen von Gegenständen vorgesehen ist.

8. Kraftfahrzeug nach Anspruch 7, **dadurch gekennzeichnet, dass** das Aufhängemittel (58) haken- oder ösenförmig ausgebildet ist.

9. Kraftfahrzeug nach einem der vorangehenden Ansprüche,
**dadurch gekennzeichnet, dass** an dem Verkleidungsteil (30, 30', 30") ein Flaschenöffner (60) vorgesehen ist.

10. Kraftfahrzeug nach einem der vorangehenden Ansprüche,
**dadurch gekennzeichnet, dass** sich das Verkleidungsteil (30, 30'; 30") ausgehend vom oberen Ende über mindestens 2/3 der Länge der Fahrzeugsäule (8"), vorzugsweise über die gesamte Länge der Fahrzeugsäule (8, 8') erstreckt.

11. Kraftfahrzeug nach einem der vorangehenden Ansprüche,
**dadurch gekennzeichnet, dass** an einem unteren Abschnitt des Verkleidungsteils (30, 30', 30") oder einem unteren, nicht von dem Verkleidungsteil (30") abgedeckten Abschnitt (68) der Fahrzeugsäule (8") ein Leuchtmittel (62) vorgesehen ist.

12. Kraftfahrzeug nach Anspruch 11, **dadurch gekennzeichnet, dass** das Leuchtmittel (62) nach außen und schräg nach unten gerichtet ist.

13. Kraftfahrzeug nach einem der Ansprüche 6 bis 12, **dadurch gekennzeichnet, dass** das Aufnahmefach (54), das Aufhängemittel (58), der Flaschenöffner (60) und/oder das Leuchtmittel (62) in der Schließstellung der beiden Seitentüren (18, 22) von den Seitentüren (18, 22) verdeckt ist.

14. Kraftfahrzeug nach einem der vorangehenden Ansprüche,
**dadurch gekennzeichnet, dass** das Verkleidungsteil (30, 30', 30") ein Kunststoffteil ist.

15. Kraftfahrzeug nach einem der vorangehenden Ansprüche,
**dadurch gekennzeichnet, dass** das Verkleidungsteil (30, 30', 30") ein Oberteil (34) und ein Unterteil (32) umfasst, die verschiedenfarbig ausgeführt sind.

16. Kraftfahrzeug nach Anspruch 15, **dadurch gekennzeichnet, dass** das Verkleidungsteil (30, 30', 30") einstückig ausgebildet ist.

17. Kraftfahrzeug nach einem der vorangehenden Ansprüche,
**dadurch gekennzeichnet, dass** eine die vordere oder hintere Fahrzeugöffnung (14, 16) umgebende erste Dichtung (66) zur Erzielung einer Abdichtung zwischen der vorderen oder hinteren Seitentür (18, 22) und dem Fahrzeugrahmen vorgesehen ist, die sich zum Teil entlang der Fahrzeugsäule (8, 8', 8") erstreckt, wobei ferner eine zweite Dichtung zur Erzielung einer Abdichtung zwischen der vorderen oder hinteren Seitentür (18, 22) und dem Verkleidungsteil (30, 30', 30") vorgesehen ist.

## Claims

1. A motor vehicle (2), comprising a front side door (18) for a front vehicle opening (14) and a rear side door (22) for a rear vehicle opening (16), with the front side door (18) having a front swiveling axis (20) and the rear side door (22) having a rear swiveling axis (24), and the two side doors (18, 22) being swivellable about the swiveling axes (20, 24) in opposite directions into the respective open position and the respective closed position, with a vehicle pillar (8, 8', 8") being provided between the front and rear vehicle opening (14, 16), **characterized in that** an outwardly facing covering part (30, 30', 30") is provided on the vehicle pillar (8, 8', 8") which comprises a middle section (36) for covering the outwardly facing side (38) of the vehicle pillar (8, 8', 8") and at least one side section (40) for covering the side (42) of the vehicle pillar (8, 8', 8") facing the front or rear vehicle opening (14, 16), with a part of a locking device for locking the front or rear side door (14, 16) being fastened to the vehicle pillar (8, 8', 8") and at least one recess (52) for guiding through the part of the locking device being provided in the side section (40).

2. A motor vehicle according to claim 1, **characterized in that** the vehicle pillar (8, 8', 8") is the B-pillar of the motor vehicle (2).

3. A motor vehicle according to one of the claims 1 or 2,
**characterized in that** the covering part (30, 30', 30") is fastened to the vehicle pillar (8, 8', 8") by means of fastening means on the side sections (40).

4. A motor vehicle according to one of the preceding claims,
**characterized in that** the part of the locking device is a striker.

5. A motor vehicle according to one of the preceding claims,
**characterized in that** the recess (52) is an elongated depression disposed at the edge in the side section (40) of the covering part (30, 30', 30").

6. A motor vehicle according to one of the preceding claims,
**characterized in that** a storage compartment (54) for storing items is provided in the covering part (30, 30', 30").

7. A motor vehicle according to one of the preceding claims,
**characterized in that** at least one suspension means (58) for suspending items is provided in the covering part (30, 30', 30").

8. A motor vehicle according to claim 7, **characterized in that** the suspension means (58) is arranged in the manner of a hook or eyelet.

9. A motor vehicle according to one of the preceding claims,
**characterized in that** a bottle opener (60) is provided in the covering part (30, 30', 30").

10. A motor vehicle according to one of the preceding claims,
**characterized in that** originating from the upper end the covering part (30, 30', 30") extends over at least two-thirds of the length of the vehicle pillar (8"), preferably over the entire length of the vehicle pillar (8, 8').

11. A motor vehicle according to one of the preceding claims,
**characterized in that** a lighting means (62) is provided on a bottom section of the covering part (30, 30', 30") or on a bottom section (68) of the vehicle pillar (8") which is
not covered by the covering part (30").

12. A motor vehicle according to claim 11, **characterized in**
**that** the lighting means (62) faces outwardly and obliquely downwards.

13. A motor vehicle according to one of the claims 6 to 12,
**characterized in that** the storage compartment (54), the suspension means (58), the bottle opener (60) and/or the lighting means (62) are covered by the side doors (18, 22) in the closed position of the two side doors (18, 22).

14. A motor vehicle according to one of the preceding claims,
**characterized in that** the covering part (30, 30', 30") is a plastic part.

15. A motor vehicle according to one of the preceding claims,
**characterized in that** the covering part (30, 30', 30") comprises an upper part (34) and a bottom part (32) which are arranged in different colors.

16. A motor vehicle according to claim 15, **characterized in that** the covering part (30, 30', 30") is integrally arranged.

17. A motor vehicle according to one of the preceding claims,
**characterized in that** a first seal (66) enclosing the front and rear vehicle opening (14, 16) is provided for achieving a seal between the front and rear side door (18, 22) and the vehicle frame, which first seal (66) extends partly along the vehicle pillar (8, 8', 8"), with further a second seal being provided for achieving a seal between the front or rear side door (18, 22) and the covering part (30, 30', 30").

## Revendications

1. Véhicule à moteur (2) avec une porte latérale avant (18) pour une ouverture avant du véhicule (14) et une porte latérale arrière (22) pour une ouverture arrière du véhicule (16), dans lequel la porte latérale avant (18) présente un axe de pivotement sur l'avant (20) et la porte latérale arrière (22) un axe de pivotement sur l'arrière (24) et les deux portes latérales (18, 22) peuvent pivoter dans des sens opposés dans leur position d'ouverture et leur position de fermeture respectives autour des axes de pivotement (20, 24), dans lequel un montant du véhicule (8, 8', 8") est prévu entre les ouvertures avant et arrière du véhicule (14, 16), **caractérisé en ce qu'**est prévu sur le montant du véhicule (8, 8', 8") un élément d'habillage (30, 30', 30") tourné vers l'extérieur qui présente une partie centrale (36) pour recouvrir le côté tourné vers l'extérieur (38) du montant du véhicule (8, 8', 8") et au moins une partie latérale (40) pour recouvrir le côté (42) tourné vers l'ouverture avant ou arrière du véhicule (14, 16) du montant du véhicule (8, 8', 8"), une partie du dispositif de fermeture servant à fermer la porte latérale avant ou arrière (14, 16) étant fixée sur le montant du véhicule (8, 8', 8") et au moins une découpe (52) étant prévue dans la partie latérale (40) pour le passage à travers de la partie du dispositif de fermeture.

2. Véhicule à moteur selon la revendication 1, **caractérisé en ce que** le montant du véhicule (8, 8', 8") est le montant B du véhicule à moteur (2).

3. Véhicule à moteur selon l'une des revendications 1 ou 2, **caractérisé en ce que** l'élément d'habillage (30, 30', 30") est fixé par des moyens de fixation sur les parties latérales (40) sur le montant du véhicule (8, 8', 8").

4. Véhicule à moteur selon l'une des revendications précédentes, **caractérisé en ce que** la partie du dispositif de fermeture est un étrier de fermeture.

5. Véhicule à moteur selon l'une des revendications précédentes, **caractérisé en ce que** la découpe (52) est un creux allongé formée du côté du bord dans la partie latérale (40) de l'élément d'habillage (30, 30', 30").

6. Véhicule à moteur selon l'une des revendications précédentes, **caractérisé en ce qu'**il est prévu dans l'élément d'habillage (30, 30', 30") un réceptacle (54) destiné à recevoir des objets.

7. Véhicule à moteur selon l'une des revendications précédentes, **caractérisé en ce qu'**il est prévu sur l'élément d'habillage (30, 30', 30") au moins un moyen d'accrochage (58) pour l'accrochage d'objets.

8. Véhicule à moteur selon la revendication 7, **caractérisé en ce que** le moyen d'accrochage (58) est en forme de crochet ou d'oeillet.

9. Véhicule à moteur selon l'une des revendications précédentes, **caractérisé en ce qu'**un ouvre-bouteilles (60) est prévu sur l'élément d'habillage (30, 30', 30").

10. Véhicule à moteur selon l'une des revendications précédentes, **caractérisé en ce que** l'élément d'habillage (30, 30', 30") s'étend à partir de l'extrémité supérieure sur au moins 2/3 de la longueur du montant du véhicule (8"), de préférence sur toute la longueur du montant du véhicule (8, 8').

11. Véhicule à moteur selon l'une des revendications précédentes, **caractérisé en ce qu'**une lampe (62) est prévue sur une partie inférieure de l'élément d'habillage (30, 30', 30") ou sur une partie inférieure (68) du montant du véhicule (8") non recouverte par l'élément d'habillage (30").

12. Véhicule à moteur selon la revendication 11, **caractérisé en ce que** la lampe (62) est orientée vers l'extérieur et en oblique vers le bas.

13. Véhicule à moteur selon l'une des revendications 6 à 12, **caractérisé en ce que** le réceptacle (54), le moyen d'accrochage (58), l'ouvre-bouteilles (60) et/ou la lampe (62) sont recouverts par les portes latérales (18, 22) dans la position de fermeture des portes latérales (18, 22).

14. Véhicule à moteur selon l'une des revendications précédentes, **caractérisé en ce que** l'élément d'habillage (30, 30', 30") est un élément en matière plastique.

15. Véhicule à moteur selon l'une des revendications précédentes, **caractérisé en ce que** l'élément d'habillage (30, 30', 30") comprend une partie supérieure (34) et une partie inférieure (32) qui sont réalisées dans des couleurs différentes.

16. Véhicule à moteur selon la revendication 15, **caractérisé en ce que** l'élément d'habillage (30, 30', 30") est réalisé d'une pièce.

17. Véhicule à moteur selon l'une des revendications précédentes, **caractérisé en ce qu'**un premier joint (66) entourant l'ouverture avant ou arrière du véhicule (14, 16) est prévu pour obtenir une étanchéité entre la porte latérale avant ou arrière (18, 22) et le châssis du véhicule et s'étend en partie le long du montant du véhicule (8, 8', 8"), un deuxième joint étant en outre prévu pour obtenir une étanchéité entre la porte latérale avant ou arrière (18, 22) et l'élément d'habillage (30, 30', 30").
